# EUROPEAN PATENT SPECIFICATION

(11) **EP 1 813 514 B1**
(45) Date of publication and mention of the grant of the patent: **11.08.2010**
(21) Application number: 06113440.9
(22) Date of filing: 03.05.2006
(51) Int. Cl.: B62J 1/00

(54) **Bicycle saddle**
Fahrradsattel
Selle de bicyclette

(30) Priority: 27.01.2006 US 307234
(43) Date of publication of application: 01.08.2007
(73) Proprietor: Chuang, Louis, Ta Lon Road Taichung (TW)
(72) Inventor: Chuang, Louis, Ta Lon Road Taichung (TW)
(74) Representative: Viering, Jentschura & Partner

(56) References cited:
- US-A- 694 875
- US-A- 823 916
- US-A- 4 512 608
- US-A- 5 286 082
- US-A1- 2002 096 917
- US-A1- 2004 004 375

## Description

### BACKGROUND OF INVENTION

### 1. FIELD OF INVENTION

The present invention relates to a saddle and more particularly to a saddle of a bicycle.

### 2. RELATED PRIOR ART

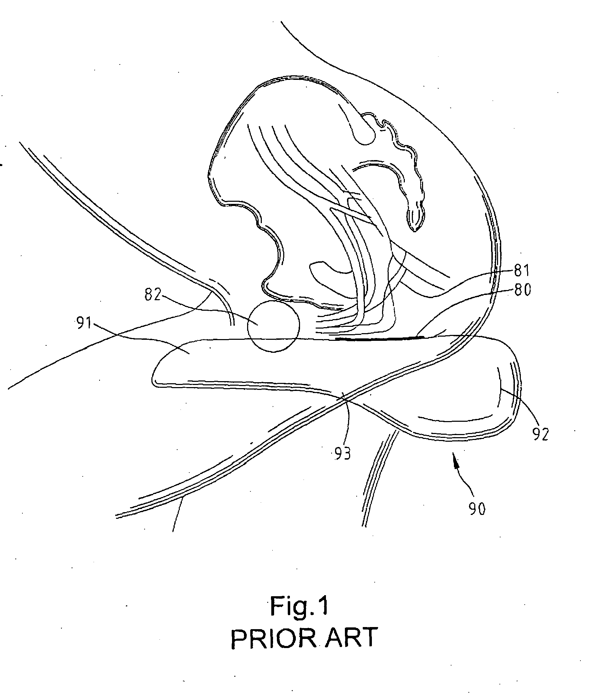

Shown in Fig. 1 is a conventional bicycle saddle 90 with a substantially triangular form tapering from a rear portion 92 to a front portion 91 through an intermediate portion 93. When a rider sits on the saddle 90, his external genitals are pressed on the intermediate portion 93 of the saddle 90. A long period of time of riding affects the circulation of the rider's blood. Moreover, as a transient portion from the wide rear portion 92 to the narrow front portion 91, the middle section 93 of the saddle 90 rubs against the rider's thighs, and causes uncomfortable feeling to the rider.

As Boston University and some Italian experts discuss in three essays in the Journal of Sexual Medicine, September 2005; the longer the rider rides, the higher the risks of erectile dysfunction and loss of libido are. The perineum 80, between the external genitals 82 and the anus, could be where things go wrong. While sitting on an ordinary saddle, a person has his ischium 81 take his weight. While riding, his perineum 80 takes his weight.

On New York Times Weekly, October 17, 2005, page 6 is a report about the essays in the Journal of Sexual Medicine. According to this report, in the perineum 80 is a sheath called Alcock's canal for containing artery and nerve leading to the penis. Sitting on the saddle 90, the rider has his perineum take his weight so that the amount of blood that goes to the penis is significantly reduced. By and by, the rider suffers erectile dysfunction and loses libido. Moreover, the rider might suffer saddle-related trauma that results in calcified masses in his scrotum.

Echoing the essays and reports, Mr. Steven Schrader, an expert in the field of external genitals working in the USA National Institute for Occupational Safety and Health, asserts that the poorly designed saddle 90 inevitably entails erectile dysfunction and the problem now is how to respond. The saddle 90 is hazardous to a rider's health, and improvements are needed.

Other known saddles are disclosed in documents US-A-6176 546, US-A-5286082 and US-A-4512608.

The present invention is therefore intended to obviate or at least alleviate the problems encountered in prior art.

### SUMMARY OF INVENTION

According to the present invention, a saddle as claimed in claim 1 is provided. The saddle includes a frame and a padding device. The frame includes a front tray and a rear tray. The padding device includes a front pad and a rear pad. The front pad is installed on the front tray. The rear pad is installed on the rear tray. A space is defined between the front pad and the rear pad. Optionally a space for accomodating a rider's perineum is defined on the rear pad.

An advantage of the saddle of the present invention is that the space between the front pad and the rear pad can accommodate the rider's external genitals. The external genitals will not be pressed against the saddle. The scrotum will not be hurt and not any calcified mass will form in the scrotum.

Another advantage of the saddle of the present invention is that the thighs will not rub against the saddle so that the rider will not feel any pain on the thighs and that the rider can move the thighs without any interference by the saddle.

Still another advantage of the saddle of the present invention is that the space on the rear pad can accommodate the perineum so that the artery and nerve in the Alcock's canal will not be pressed against the saddle and that the circulation of blood to the penis will not be suppressed.

Other advantages and features of the present invention will become apparent from the following description referring to the drawings.

### BRIEF DESCRIPTION OF DRAWINGS

The present invention will be described through detailed illustration referring to the drawings.
Fig. 1 is a side view of a rider sitting on a conventional saddle of a bicycle.
Fig. 2 is a perspective view of a first saddle which is not according to the present invention but useful to understand the present invention.
Fig. 3 is an exploded view of the saddle shown in Fig. 2.
Fig. 4 is a top view of the saddle shown in Fig. 2.
Fig. 5 is a side view of the saddle shown in Fig. 2.
Fig. 6 is a rear view of a rider sitting on the saddle shown in Fig. 2.
Fig. 7 is a top view of the saddle shown in Fig. 6.
Fig. 8 is a side view of the saddle shown in Fig. 7.
Fig. 9 is a perspective view of a second saddle which is not according to the present invention but useful to understand the present invention.
Fig. 10 is a perspective view of a third saddle which is not according to the present invention but useful to understand the present invention.
Fig. 11 is a perspective view of a fourth saddle which is not according to the present invention but useful to understand the present invention.
Fig. 12 is a side view of the saddle shown in Fig. 11.
Fig. 13 is a perspective view of a fifth saddle which is not according to the present invention but useful to understand the present invention.
Fig. 14 is a top view of the saddle shown in Fig. 13.
Fig. 15 is a perspective view of a sixth saddle which is not according to the present invention but useful to understand the present invention.
Fig. 16 is a perspective view of a seventh saddle which is not according to the present invention but useful to understand the present invention.
Fig. 17 is a perspective view of a saddle according to an embodiment of the present invention.
Fig. 18 is an exploded view of the saddle shown in Fig. 17.
Fig. 19 is a side view of the saddle shown in Fig. 17.
Fig. 20 is a perspective view of a eight saddle which is not according to the present invention but useful to understand the present invention.
Fig. 21 is a side view of the saddle shown in Fig. 20.

### DETAILED DESCRIPTION OF EMBODIMENTS

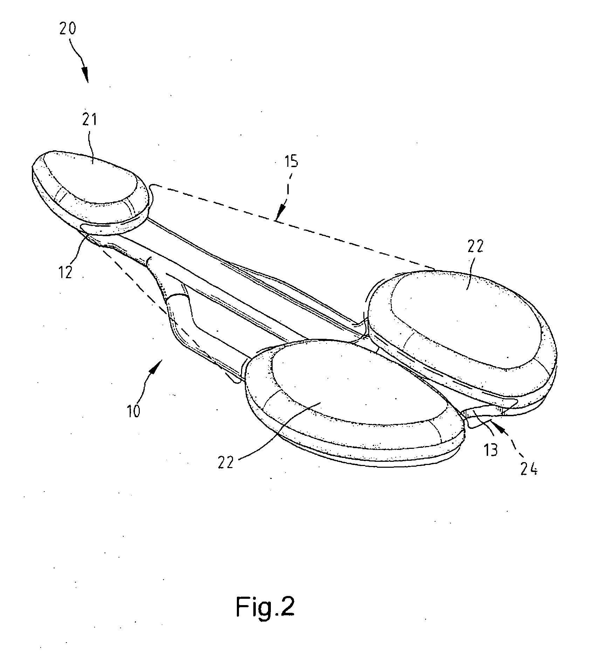

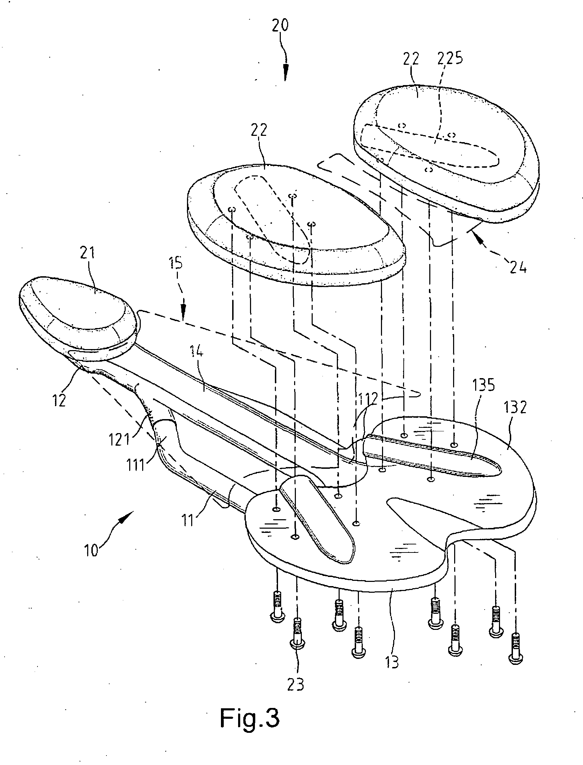

Referring to Figs. 2 through 5, there is shown a first saddle 20 which is not according to the present invention but useful to understand the present invention. The saddle 20 is for a bicycle and includes a frame 10 and a padding device 20.

The frame 10 includes a reinforcement element 14, a front tray 12 formed at a front section of the reinforcement element 14, a rear tray 13 formed at a rear section of the reinforcement element 14 and two beams 11 for connecting the front tray 12 to the rear tray 13. The reinforcement element 14 is used to reinforce the frame 10. The reinforcement element 14 can however be omitted in another embodiment.

Each of the beams 11 includes a front section 111 extending forward and upward and a rear section 112 extending backward and upward. The front sections 111 of the beams 11 extend toward each other. The rear sections 112 of the beams 11 extend away from each other. The beams 11 can be connected to the saddle post of a bicycle.

The front tray 12 includes two sockets 121 on the bottom for receiving the front sections 111 of the beams 11. The front tray 12 includes a flat contact surface 122 on the top.

The rear tray 13 includes two sockets 131 on the bottom for receiving the rear sections 112 of the beams 111. The rear tray 13 includes a flat contact surface 132 on the top and two ridges 135 on the top.

The padding device 20 includes a front pad 21 and two rear pads 22. The front pad 21 includes a groove defined in the bottom and a block formed on the bottom within the groove 215.

The front pad 21 is installed on the contact surface 122 of the front tray 12.

The rear pads 22 are installed on the contact surface 132 of the rear tray 13. Each of the rear pads 22 defines, in defined in the bottom, a groove 225 for receiving related one of the ridges 135 so that the rear pads 22 can be precisely positioned on the rear tray 13. The rear pads 22 are secured to the rear tray 13 by means of a plurality of fasteners 23 such as threaded bolts.

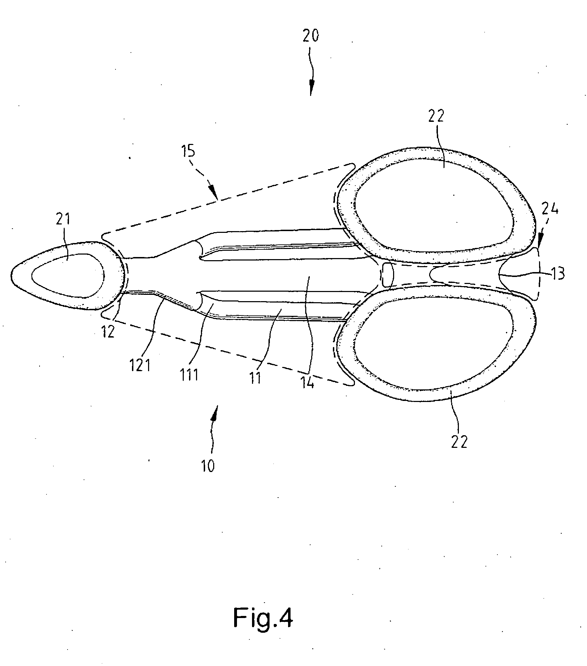

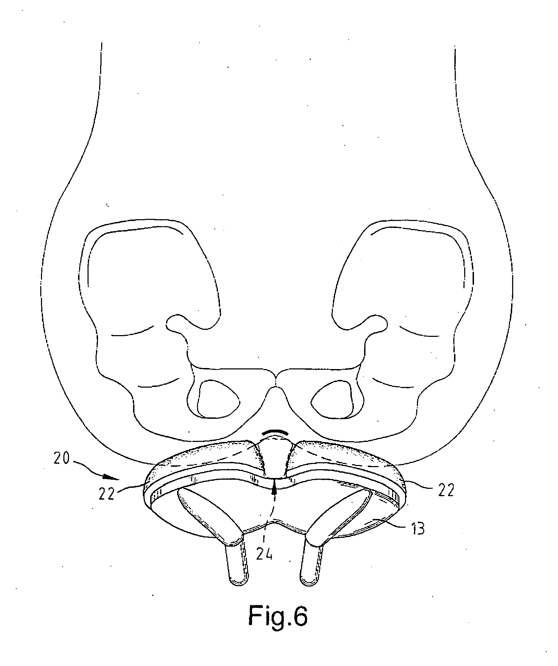

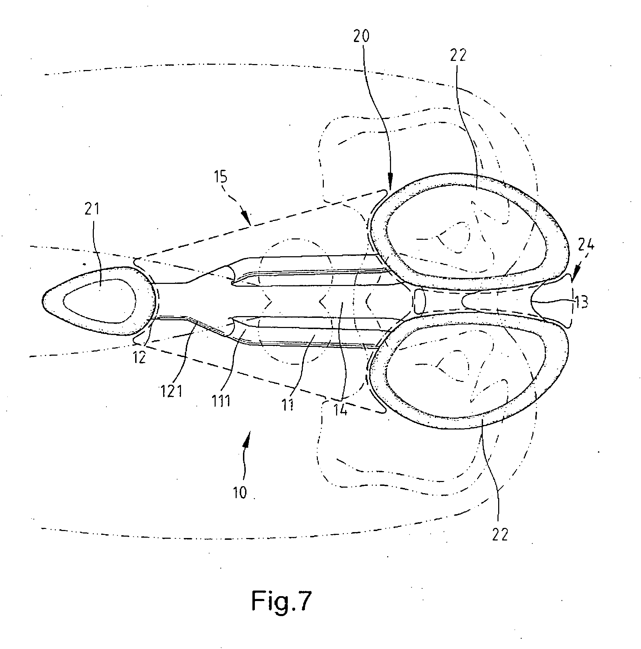

Referring to Figs. 4, 6 and 7, there is a space 24 between the rear pads 22. With the space 24 between the rear pads 22, a rider's perineum will not be pressed against the saddle. The artery and nerve in the Alcock's canal will not be pressed. The circulation of blood to the rider's penis will not be suppressed.

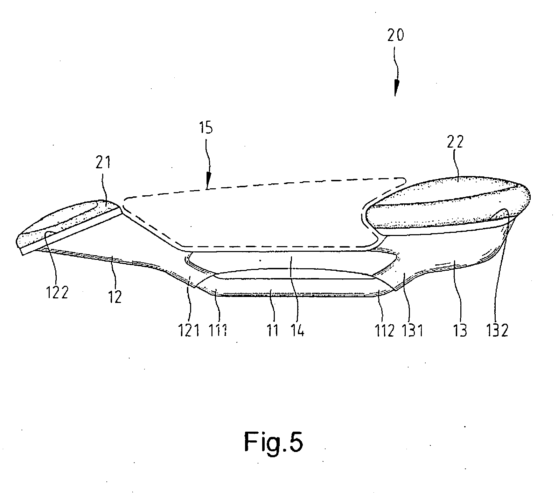

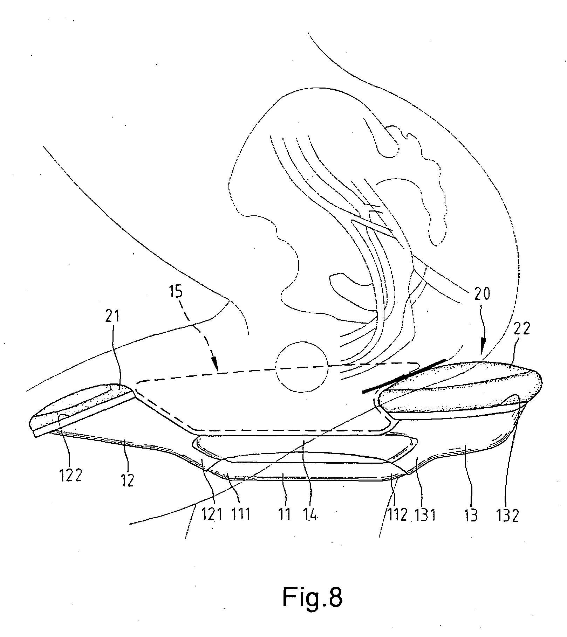

Referring to Figs. 5, 7 and 8, there is a space 15 above the reinforcement element 14, between the front pad 21 and the rear pads 22. The space 15 can accommodate a rider's perineum and external genitals. The rider's perineum and the external genitals will not be pressed against the saddle. The circulation of blood will not be suppressed. Moreover, the rider's thighs will not rub against the saddle so that the rider will not feel pain in his thigh and that the rider can move the thighs freely.

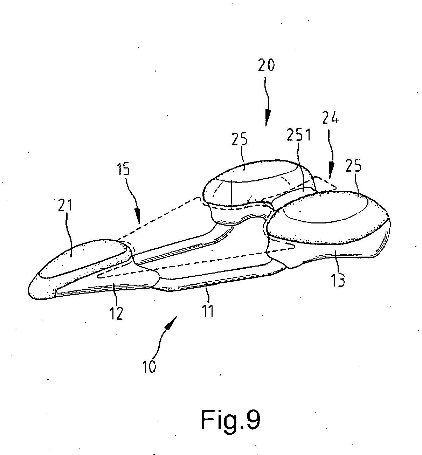

Show in Fig. 9 is a second saddle which is not according to the present invention but useful to understand the present invention. The second saddle is like the first saddle except two things. Firstly, the reinforcement element 14 is omitted. Secondly, used are two rear pads 25 that are integrated with each other instead of the rear pads 22 that are separate from each other. The rear pads 25 are integrated by means of a thin connecting portion 251. The space 24 is still defined between the rear pads 25.

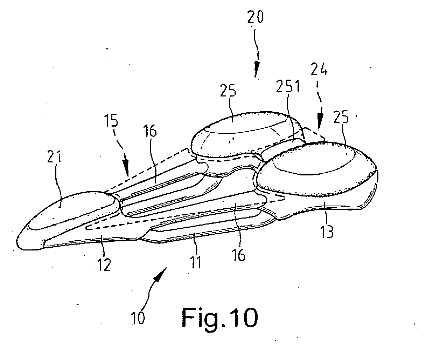

Shown in Fig. 10 is a third saddle which is not according to the present invention but useful to understand the present invention. The third saddle is like the second saddle except including two reinforcement elements 16 between the front tray 12 and the rear tray 13. Each of the reinforcement elements 16 is located above related one of the beams 11. The space 15 is still defined between the front pad 21 and the rear pads 25.

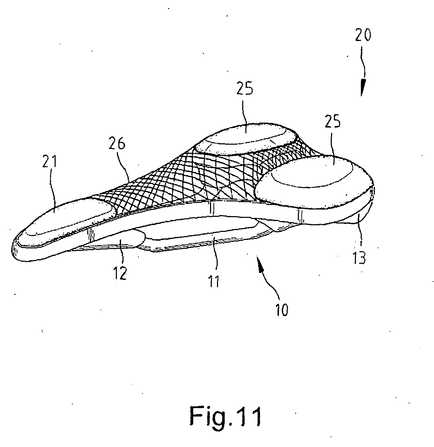

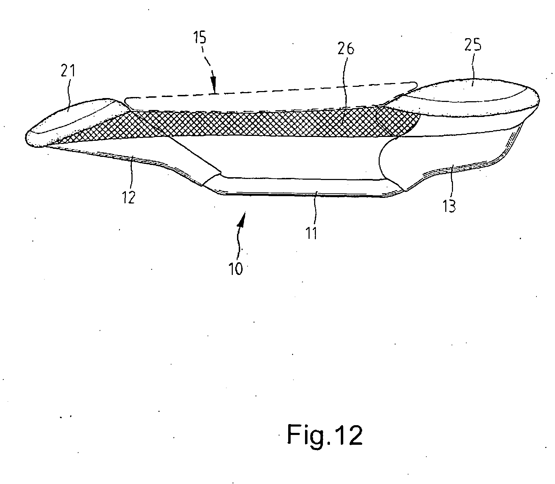

Shown in Figs. 11 and 12 is a fourth saddle which is not according to the present invention but useful to understand the present invention. The fourth saddle is like the second saddle except including an elastic web 26 spread between the pads 21 and 25. The elastic web 26 is softer than a sponge pad or a leather pad. The elastic web 26 is preferably a net. The elevation of elastic web 26 is lower than that of the pads 21 and 25 so that the space 15 is still defined between the front pad 21 and the rear pads 25 and that the space 24 is still defined between the rear pads 25. The elastic web 26 supports the rider's external genitals without substantially pressing the rider's external genitals and perineum.

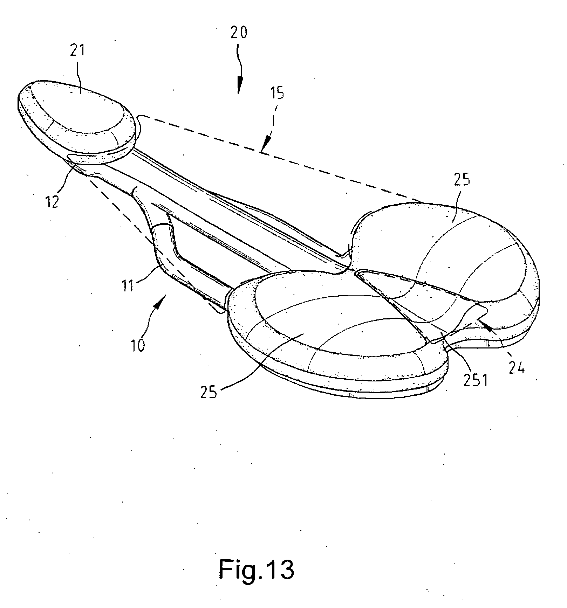

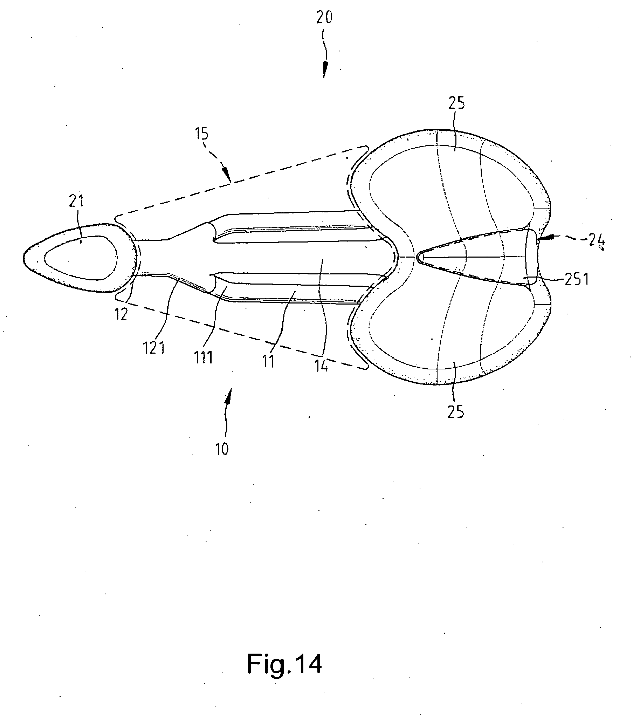

Shown in Figs. 13 and 14 is a fifth saddle which is not according to the present invention but useful to understand the present invention. The fifth saddle is like the first embodiment except including two rear pads 25 that are integrated with each other via a thin connecting portion 251 instead of the rear pads 21 that are separate from each other. The space 24 is still defined between the rear pads 25. The space 24 gets deeper and wider from the front to the rear.

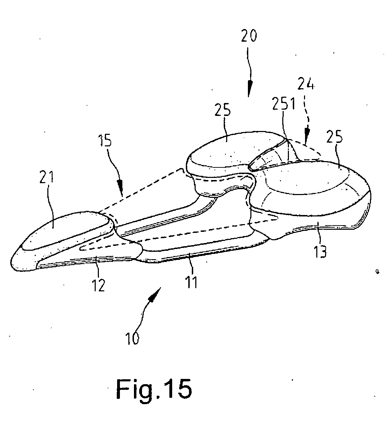

Shown in Fig. 15 is a sixth saddle which is not according to the present invention but useful to understand the present invention. The sixth saddle is like the second saddle except that the space 24 gets deeper and wider instead of evenly deep and wide from the front to the rear.

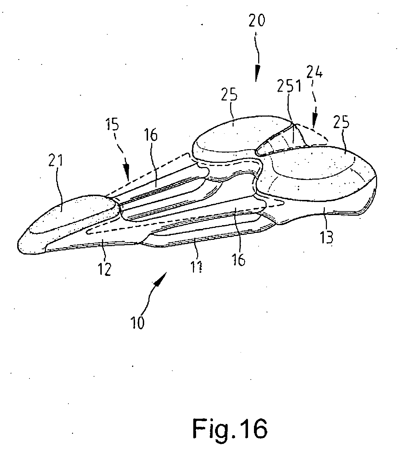

Shown in Fig. 16 is a seventh saddle which is not according to the present invention but useful to understand the present invention. The seventh saddle is like the third saddle except that the space 24 gets deeper and wider instead of evenly deep and wide from the front to the rear.

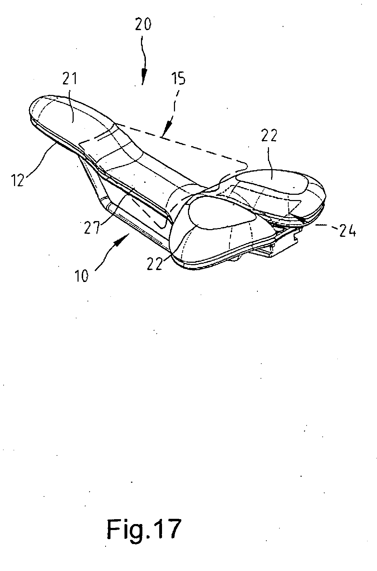

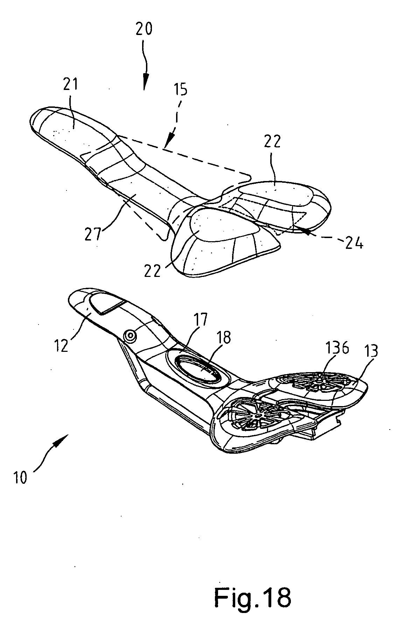

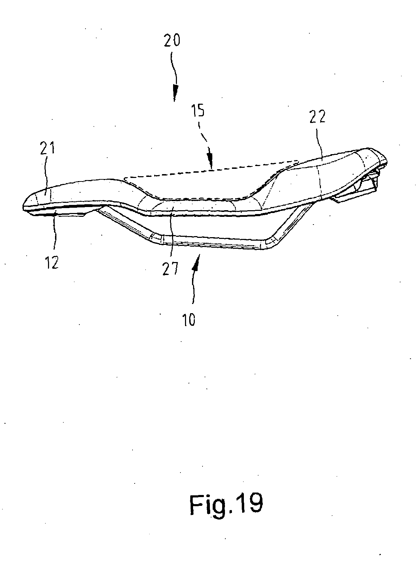

Shown in Figs. 17 through 19 is a saddle according to an eighth embodiment of the present invention. The saddle includes a frame 10 and a padding element 20.

The frame 10 includes a front tray 12, a rear tray 13 and a connective portion 17 for integrating the front tray 12 with the rear tray 13. That is, the front tray 12, the rear tray 13 and the connective portion 17 are made one. Defined between the trays 12 and 13 and above the connective portion 17 is a space 15 for accommodating the rider's external genitals. The rear tray 13 includes two elastic portions 136 for elastic contact with the rider's hips. The elastic portions 136 are formed by means of making a plurality of apertures therein. The connective portion 17 defines an opening 18 so as to make the connective portion 17 flexible.

The padding element 20 is substantially shaped corresponding to the frame 10. The padding element 20 includes a front padding portion 21, a rear padding portion 22 and a middle padding portion 27 for integrating the front padding portion 21 with the rear padding portion 22. That is, the front padding portion 21, the rear padding portion 22 and the middle padding portion 27 are made one. The padding element 20 is preferably made of a foam material for providing elasticity and an aesthetically pleasant look.

The padding element 20 is installed on the frame 10. In detail, the front padding portion 21 covers the front tray 12. The rear padding portion 22 covers the rear tray 13. The middle padding portion 27 covers the connective portion 17.

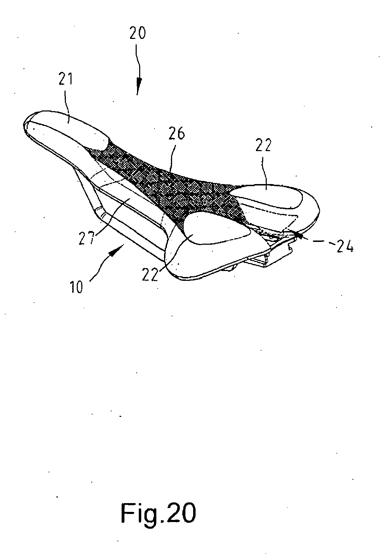

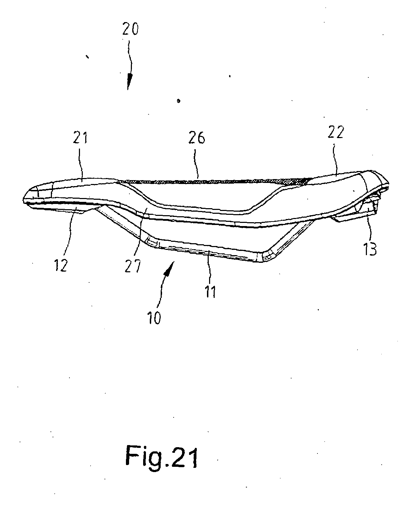

Shown in Figs. 20 and 21 is a eight saddle which is not according to the present invention but useful to understand the present invention. The eight saddle is like the embodiment of fig. 17-19 except including an elastic web 26 between the front padding portion 21 and the rear padding portion 22. The elastic web 26 is used to support the rider's external genitals without excessively pressing the same.

The saddle according to the present invention exhibits the following advantages.

Firstly, the space between the front pad and the rear pads can accommodate the rider's external genitals. The external genitals will not be pressed against the saddle. The scrotum will not be hurt and not any calcified mass will form in the scrotum.

Secondly, the thighs will not rub against the saddle so that the rider will not feel any pain on the thighs and that the rider can move the thighs without any interference by the saddle.

Thirdly, the space between the rear pads can accommodate the perineum so that the artery and nerve in the Alcock's canal will not be pressed against the saddle and that the circulation of blood to the penis will not be suppressed.

The present invention has been described through the illustration of the embodiments. Those skilled in the art can derive variations from the embodiments without departing from the scope of the present invention. Therefore, the embodiments shall not limit the scope of the present invention defined in the claims.

## Claims

1. A saddle comprising:_
a frame (10) comprising a front tray (12) and a rear tray (13); and
a padding device (20) comprising a front pad (21) installed on the front tray (12) and a rear pad (22) installed on the rear tray (13),_ wherein the front pad (21) and the rear pad (22) are designed to define a space (15) between the front and rear pads (21, 22) to accommodate a rider's external genitals so that the external genitals will not be pressed against the saddle, the scrotum will not be hurt, and the thighs will not rub against the saddle and can be moved without any interference by the saddle,
**characterized in that**
said padding device (20) further comprises a middle pad (27) situated lower than the front pad (21) and the rear pad (22) and integrating the front pad (21) with the rear pad (22), wherein the front pad (21), the rear pad (22) and the middle pad (27) are made as one and designed to define a space (15) between them to accommodate a rider's external genitals so that the external genitals will not be pressed against the saddle, the scrotum will not be hurt, and the thighs will not rub against the saddle and can be moved without any interference by the saddle, wherein the frame comprises a connective portion (17) for integrating the front tray with the rear tray, wherein the padding device comprises the middle pad (27) installed on the connective portion (17) of the frame.

## Patentansprüche

1. Sattel, aufweisend:
einen Rahmen (10), der eine vordere Ablage (12) und eine hintere Ablage (13) aufweist; und
eine Polsteranordnung (20), die ein vorderes Polster (21), das an der vorderen Ablage (12) angebracht ist, und ein hinteres Polster (22) aufweist, das an der hinteren Ablage (13) angebracht ist,
wobei das vordere Polster (21) und das hintere Polster (22) derart ausgebildet sind, dass zwischen dem vorderen und dem hinteren Polster (21, 22) ein Raum (15) zum Aufnehmen der äußeren Genitalien eines Fahrers bestimmt ist, so dass die äußeren Genitalien nicht gegen den Sattel gedrückt werden, der Hodensack nicht verletzt wird und die Oberschenkel nicht an dem Sattel scheuern und ohne jegliche Beeinträchtigung durch den Sattel bewegt werden können,
**dadurch gekennzeichnet, dass**
die Polsteranordnung (20) ferner ein mittleres Polster (27) aufweist, das niedriger als das vordere Polster (21) und das hintere Polster (22) liegt und das vordere Polster (21) mit dem hinteren Polster (22) integriert, wobei das vordere Polster (21), das hintere Polster (22) und das mittlere Polster (27) als eins hergestellt und derart ausgebildet sind, dass zwischen ihnen ein Raum (15) zum Aufnehmen der äußeren Genitalien eines Fahrers bestimmt ist, so dass die äußeren Genitalien nicht gegen den Sattel gedrückt werden, der Hodensack nicht verletzt wird und die Oberschenkel nicht an dem Sattel scheuern und ohne jegliche Beeinträchtigung durch den Sattel bewegt werden können, wobei der Rahmen einen verbindenden Abschnitt (17) zum Integrieren der vorderen Ablage mit der hinteren Ablage aufweist, wobei die Polsteranordnung das mittlere Polster (27) aufweist, das an dem.verbindenden Abschnitt (17) des Rahmens angebracht ist.

## Revendications

1. Selle comprenant :
un châssis (10) comprenant un plateau avant (12) et un plateau arrière (13) ; et un dispositif de rembourrage (20) comprenant un rembourrage avant (21) installé sur le plateau avant (12) et un rembourrage arrière (22) installé sur le plateau arrière (13), dans lequel le rembourrage avant (21) et le rembourrage arrière (22) sont conçus pour définir un espace (15) entre les rembourrages avant et arrière (21, 22) pour recevoir les organes génitaux externes d'un cycliste de sorte que les organes génitaux externes ne soient pas comprimés contre la selle, que le scrotum ne soit pas heurté et que les cuisses ne frottent pas contre la selle et puissent être déplacées sans interférence avec la selle, **caractérisée en ce que**
ledit dispositif de rembourrage (20) comprend en outre un rembourrage central (27) situé plus bas que le rembourrage avant (21) et le rembourrage arrière (22) et intégrant le rembourrage avant (21) au rembourrage arrière (22), dans laquelle le rembourrage avant (21), le rembourrage arrière (22) et le rembourrage central (27) sont fabriqués d'une seule pièce et conçus pour définir un espace (15) entre eux pour recevoir les organes génitaux externes d'un cycliste de sorte que les organes génitaux externes ne soient pas comprimés contre la selle, que le scrotum ne soit pas heurté et que les cuisses ne frottent pas contre la selle et puissent être déplacés sans interférence avec la selle, dans laquelle le châssis comprend une partie de raccordement (17) pour intégrer le plateau avant au plateau arrière et dans laquelle le dispositif de rembourrage comprend le rembourrage central (27) installé sur la portion de raccordement (17) du châssis.
